# EUROPEAN PATENT SPECIFICATION

(11) **EP 1 995 147 B1**
(45) Date of publication and mention of the grant of the patent: **30.01.2013**
(21) Application number: 08009479.0
(22) Date of filing: 23.05.2008
(51) Int. Cl.: B61L 15/00, H04L 29/12, H04L 12/40

(54) **Transmission system for rail vehicles using an automatic address allocation**
Übertragungssystem für Schienenfahrzeuge mit automatischer Addresszuweisung
Système de transmission pour véhicules ferroviaires utilisant une allocation automatique des adresses

(30) Priority: 24.05.2007 JP 2007138260
(43) Date of publication of application: 26.11.2008
(73) Proprietor: Kabushiki Kaisha Toshiba, Minato-ku, Tokyo 105-8001 (JP)
(72) Inventor: Takahashi, Hideyuki, Tokyo (JP)
(74) Representative: HOFFMANN EITLE

(56) References cited:
- EP-A- 1 065 127
- EP-A- 1 320 222
- EP-A- 1 521 401
- WO-A-2006/075767
- DE-A1-102005 055 447
- US-A- 5 353 413
- US-A1- 2006 180 709

## Description

### BACKGROUND OF THE INVENTION

### 1. Field of the Invention

The present invention relates to a transmission system for rail vehicles and more particularly relates to a transmission system for rail vehicles employing a network.

### 2. Description of the Related Art

In conventional transmission systems for rail vehicles, a switch was provided for address setting in the electrical devices such as for example display devices that are connected with a transmission device, and the address of the transmission device and electrical device was set by manual setting of this switch. In a transmission system for rail vehicles constructed in this way, the address of the transmission station provided in the transmission devices and electrical devices was not allowed to coincide with that of other devices, even when the network was constituted within the rail vehicle, so it was possible to identify from which transmission device the information had originated.

However, if the network in the rail vehicle is constructed using the conventional rail vehicle transmission system, in which IPV4 (Internet Protocol Version 4, in hexadecimal, four-digits) that is currently widely employed is adopted, a large number of switches for address setting must be provided in the transmission devices and electrical devices, and the switches have to be made of small size in order that the large number of switches can be accommodated. Consequently, mis-settings by the workers engaged in the task of registration of the addresses of the transmission devices can easily occur, and the task itself is difficult. Conventionally, therefore, realization of a rail vehicle transmission system wherein address setting can easily be achieved and wherein the network is easy to construct presented a technical challenge.

On the other hand, even if an automated technique (DHCP = Dynamic Host Configuration Protocol), which has recently become increasingly common, is adopted in the rail vehicle network for address setting, since a rail vehicle contains more than one electrical device of the same type such as electrical devices such as for example display devices, even when the address is automatically allocated by DHCP, correspondence between the IP address and the electrical device (numbers identifying the vehicle and the display device) is lost. This led to problems such as that for example it could happen that the content intended to be displayed on the display device of the No. 1 vehicle might be displayed on the display device of the No. 5 vehicle. An example of the disclosure of technology of this kind is to be found in Laid-open Japanese Patent Application No. Tokkai 2004-304826 (hereinbelow referred to as Patent Reference 1).

US 5 353 413 relates to a method and apparatus for initializing a communication network in a train including a plurality of cars. The network comprises a train bus, a train bus master on one of the cars and a train bus slave on each other car connectable to the train bus master by the train bus for communicating with the train bus master. It is determined whether the one car with the train bus master is located at the end of the train or in the middle of the train. A first message between the master and slaves is transmitted in order to allocate an address to each train bus slave located in one direction. When it is determined that one car is located in the middle of the train, a second message between master and slave in a given direction is transmitted, in order to allocate addresses to each train bus slave in another given direction and data is acquired at this train bus master identifying each slave in the other direction.

EP 1 521 401 A1 relates to a system in building services engineering and method for configuring the same. A configurator enables the configuration within a sub-network connected with a data bus (EIB) having individual gate addresses. An IP controller determines the assignment of units (switches, sensors, actuators, etc.) belonging to different sub-networks.

US 2006/0180709 A1 relates to a method and system for IP train inauguration. The method comprises indentifying a leading car of a plurality of cars that form a train. The train includes at least one unit of cars such that a first unit includes the leading car. Network and configuration information is discovered for cars in the train and is broadcast to units in the train. Car and unit topology of the train is generated based on this information and the leading car. NAT translation addresses are generated for fixed IP addresses of devices in the plurality of cars.

EP 1 065 127 A1 relates to means for converting communication protocols between a vehicle bus and a train bus in a train communication system. The train bus is used for communication between vehicles of the train, and each train comprises an internal vehicle bus connected via a gateway to the train bus. One of the vehicle busses is a master-vehicle bus while the other vehicle buses are slave-vehicle buses.

WO 2006/075767 A2 relates to a data transmission system and data transmission method. The system includes an electric wire laid in cars, a PLC modem connected with each electric wire and a terminal connected with each PLC modem. The terminal can communicate through the electric wire by using the PLC modem. When cars are coupled with each other, the electric wires are electrically connected with each other and a new address is allocated to a control unit which has a unique address provided for each terminal.

### SUMMARY OF THE INVENTION

Accordingly, one object of the present invention is to provide a novel transmission system for rail vehicles offering high redundancy and excellent maintainability.

In order to achieve the above object, the present invention is constructed as follows. Specifically, according to the invention there is provided a transmission system for rail vehicles comprising: transmission devices mounted on each of a plurality of vehicles, having a plurality of transmission ports, and that are adapted to transmit data received from any port to a required transmission port in accordance with a prescribed instruction; a transmission path for connecting transmission devices mounted in each of a plurality of said vehicles; electrical devices that are connected with respective said transmission devices and that are adapted to exchange data with these transmission devices; and transmission relay control devices arranged in respective said transmission devices and that are adapted to set a transmission station address of said electrical devices connected to their host transmission device, wherein said transmission device is adapted, on address setting of an electrical device having an automatic address setting function in a network in which there are mounted a plurality of electrical devices of the same type, to create a condition wherein only said transmission device itself and an electrical device that is connected with said transmission device are connected to said network, by temporarily stopping data exchange with an other transmission device and designating said transmission station addresses of said electrical device in accordance with a prescribed setting.

Also according to the present invention, there is provided a transmission system for rail vehicles comprising: transmission devices mounted on each of a plurality of vehicles, having a plurality of transmission ports, and that are adapted to transmit data received from any port to a required transmission port in accordance with a prescribed instruction; a transmission path for connecting between said transmission devices mounted in a plurality of said vehicles; electrical devices that are connected with respective said transmission devices and that are adapted to exchange data with these transmission devices; and transmission relay control devices arranged in respective said transmission devices and that are adapted to set a transmission station address of said electrical devices connected to their host transmission device; and a transmission station address conversion device that is adapted to convert said transmission station address, wherein said transmission station address conversion device is adapted to employ said same transmission station address as default address in respect of said transmission stations of identical electrical devices, and adapted to uniquely set said transmission station address on data flowing on a network even when more than one electrical device of the same type is present on said network, by converting said transmission station address in the data to a prescribed transmission station address when data is received from an electrical device and on data transmission to an electrical device.

With the present invention, when performing the address setting of the electrical devices, data exchange with other transmission devices is temporarily stopped, so that a condition is created wherein only the transmission device itself and the electrical devices that are connected with the transmission device itself are connected with the network: thus the transmission device in question is the master of automatic address setting, and can set unique addresses for the electrical devices; in this way, a network can be constructed of high redundancy and excellent maintainability.

Also with the present invention, as the transmission station address of the same electrical device, the same transmission station address is directly employed as a default and, when data is received from an electrical device or when data is transmitted to an electrical device, the transmission station address conversion device on the transmission device side converts the transmission station address in the data to a prescribed transmission station address: in this way, the transmission station address on the data flowing on the network can be uniquely set even in the case of a network wherein electrical devices of more than one type are present; in this way, a network can be constructed of high redundancy and excellent maintainability.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
FIG. 1 is a block diagram showing the construction of a transmission system for a rail vehicle according to a first embodiment of the present invention and a transmission device for a rail vehicle employing this;
FIG. 2 is a block diagram showing the construction of a rail vehicle employing a rail vehicle transmission system according to the first embodiment of the present invention;
FIG. 3 is a diagram of an example of a transmission system for a rail vehicle and IP address setting of a transmission device for a rail vehicle using this according to the first embodiment of the present invention;
FIG. 4 is a diagram of an example of a transmission system for a rail vehicle and IP address setting of a transmission device for a rail vehicle using this according to the first embodiment of the present invention;
FIG. 5 is a diagram of an example of a transmission system for a rail vehicle and IP address setting of a transmission device for a rail vehicle using this according to the first embodiment of the present invention;
FIG. 6 is a diagram of an example of a transmission system for a rail vehicle and IP address setting of a transmission device for a rail vehicle using this according to the first embodiment of the present invention;
FIG. 7 is a diagram of an example of a transmission system for a rail vehicle and IP address setting of a transmission device for a rail vehicle using this according to the first embodiment of the present invention;
FIG. 8 is a diagram of an example of a transmission system for a rail vehicle and IP address setting of a transmission device for a rail vehicle using this according to the first embodiment of the present invention;
FIG. 9 is a diagram of an example of a transmission system for a rail vehicle and IP address setting of a transmission device for a rail vehicle using this according to the first embodiment of the present invention;
FIG. 10 is a diagram of an example of a transmission system for a rail vehicle and IP address setting of a transmission device for a rail vehicle using this according to the first embodiment of the present invention;
FIG. 11 is a diagram of an example of a transmission system for a rail vehicle and IP address setting of a transmission device for a rail vehicle using this according to a second embodiment of the present invention;
FIG. 12 is a diagram of an example of a transmission system for a rail vehicle and IP address setting of a transmission device for a rail vehicle using this according to a second embodiment of the present invention;
FIG. 13 is a diagram of an example of a transmission system for a rail vehicle and IP address setting of a transmission device for a rail vehicle using this according to the second embodiment of the present invention;
FIG. 14 is a diagram of an example of a transmission system for a rail vehicle and IP address setting of a transmission device for a rail vehicle using this according to the second embodiment of the present invention;
FIG. 15 is a diagram of an example of a transmission system for a rail vehicle and IP address setting of a transmission device for a rail vehicle using this according to the second embodiment of the present invention; and
FIG. 16 is a diagram of an example of a transmission system for a rail vehicle and IP address setting of a transmission device for a rail vehicle using this according to the second embodiment of the present invention.

### DETAILED DESCRIPTION OF THE PREFERRED EMBODIMENTS

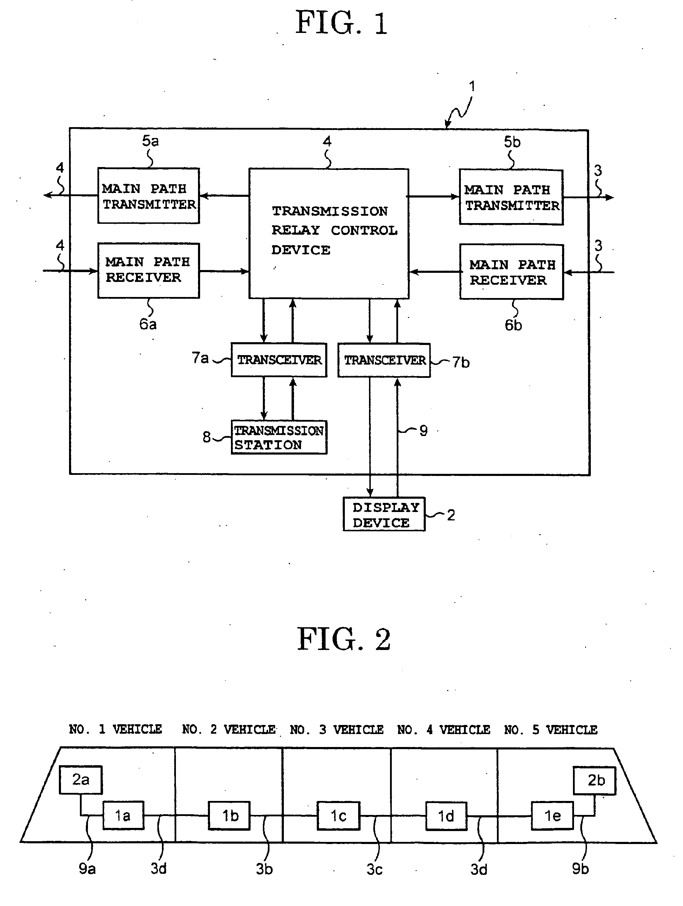

Referring now to the drawings, wherein like reference numerals designate identical or corresponding parts throughout the several views, and more particularly to FIG. 1 thereof, one embodiment of the present invention will be described.

An embodiment of the present invention is described below with reference to the drawings.

### (First embodiment)

FIG. 1 shows the construction of a transmission system for a rail vehicle according to a first embodiment of the present invention and FIG. 2 shows the network connection layout within this vehicle. In the transmission system for a rail vehicle according to this embodiment, transmission devices 1a to 1e are mounted in respective rail vehicles No. 1 to No. 5 and exchange (transmission and reception) of data is performed by point-to-point connection using main transmission paths 3a to 3d. Also, a display device 2a is arranged in the No. 1 vehicle and a display device 2b is arranged in the No. 5 vehicle, and the transmission device 1a of the No. 1 vehicle and the transmission device 1e of the No. 5 vehicle are respectively connected by respective branch transmission paths 9a, 9b. In the following description, where it is necessary to distinguish structural elements individually, the symbols 1a to 1e, 2a, 2b, 3a to 3d etc are employed, but, when there is no need to distinguish individual elements, these are represented by the symbols 1, 2, 3 etc.

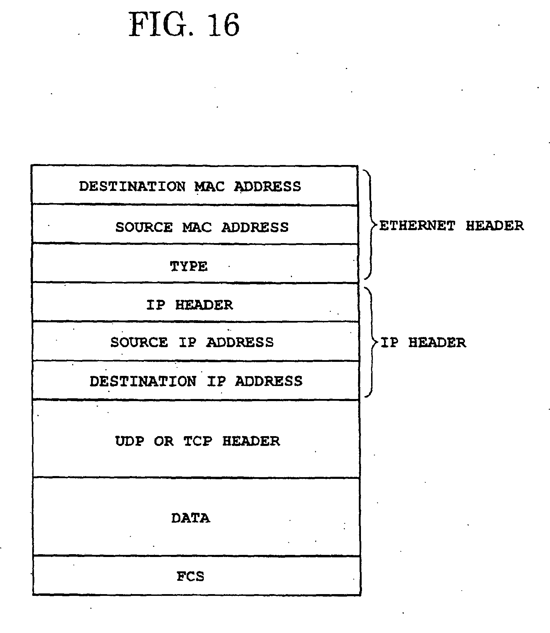

As shown in Figure 16, the data exchanged by the transmission device 1 includes an Ethernet header (destination MAC address (Media Access Control address)+source MAC address+type), IP header (including source IP address (Internet Protocol address), destination IP address), TCP header (Transmission Control Protocol Header) or a UDP header (User Datagram Protocol Header) data information and CRC (Cyclic Redundancy Check) check data (FCS (Frame Check Sequence)). These are generally referred to as the Ethernet Frame. Ethernet is a registered trademark of Xerox Corporation.

The transmission device 1 of the present embodiment is constructed by connecting 2-port main path transmitters 5a, 5b whose transmission capability can be enabled/disabled, 2-port main path receivers 6a, 6b whose transmission capability can be enabled/disabled, a transceiver 7a that performs data exchange within its host vehicle, a transmission station 8, and a transceiver 7b whose transmission capability can be enabled/disabled that performs transmission with respect to a display device 2 with a transmission relay control device 4. The display device 2 constituting the electrical device is connected with the transmission device 1 by means of the transceiver 7b.

It should be noted that, although in the present embodiments, the electrical device has been described as a display device 2, other devices could be employed. Also, although, in the present embodiment, the electrical device was described as being a single device, more than one such device could be employed. In this case, the number of transceivers 7b is increased. Also, although in the description of the transmission system for rail vehicles of the present embodiment, the employment of IPV4 private address class C as the transmission station address was described, Class B or Class A could be employed, and IPV6 etc could be employed.

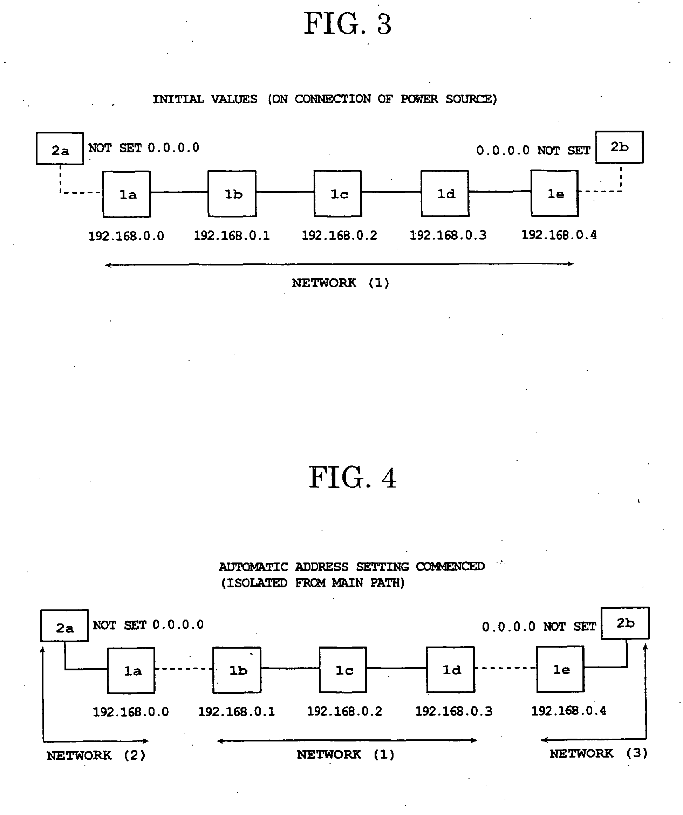

Next, the operation of the transmission system for a rail vehicle according to the present embodiment will be described. As shown in FIG. 3, the initial condition on connection of the power source is that the transmission devices 1a to 1e have addresses: (192. 168. 0. 0) to (192. 168. 0. 4). On the other hand, the display devices 2a, 2b have the condition that their IP addresses are not yet set i.e. their IP addresses are (0. 0. 0. 0). At this point, the transmission devices 1a, 1e are in a condition that their transmission/reception with respect to the display devices 2a, 2b is disabled.

As shown in FIG. 4, when automatic address setting is commenced, the transmission device 1a is in a condition in which data exchange with the transmission device 1b is disabled, and the transmission device 1e is in a condition in which data exchange with the transmission device 1d is disabled. Transmission/reception of the transmission device 1a with the display device 2a and transmission/reception of the transmission device 1e with the display device 2b are then enabled. As a result, at the network in the rail vehicle is logically divided into the network (1) of the transmission devices 1b to 1d, the network (2) of the transmission device 1a and the display device 2a, and the network (3) of the transmission device 1e and the display device 2b.

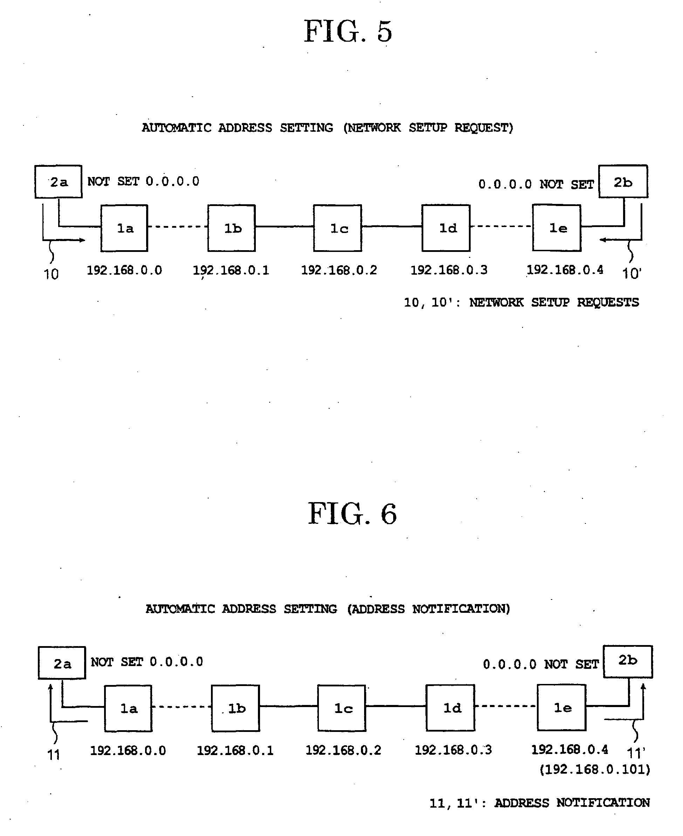

Next, as shown in FIG. 5, the transmission device 1a waits for a network setup request 10 from the display device 2a. A network setup request is transmitted by broadcast from the display device 2 having DHCP functionality. As a result, transmission/reception by the transmission device 1a with respect to the transmission device 1b is disabled and this thereby prevents a network setup request 10' from the display device 2b on the opposite side from reaching the transmission device 1a. In the same way, the transmission device 1e waits for a network setup request 10' from the display device 2b.

As shown in FIG. 6, when the transmission device 1a has received the network setup request 10, it transmits an address notification 11 including a predetermined IP address (192. 168. 0. 100) to the display device 2a. Likewise, the transmission device 1e transmits an address notification 11' including an IP address (192. 168. 0. 101) to the display device 2b.

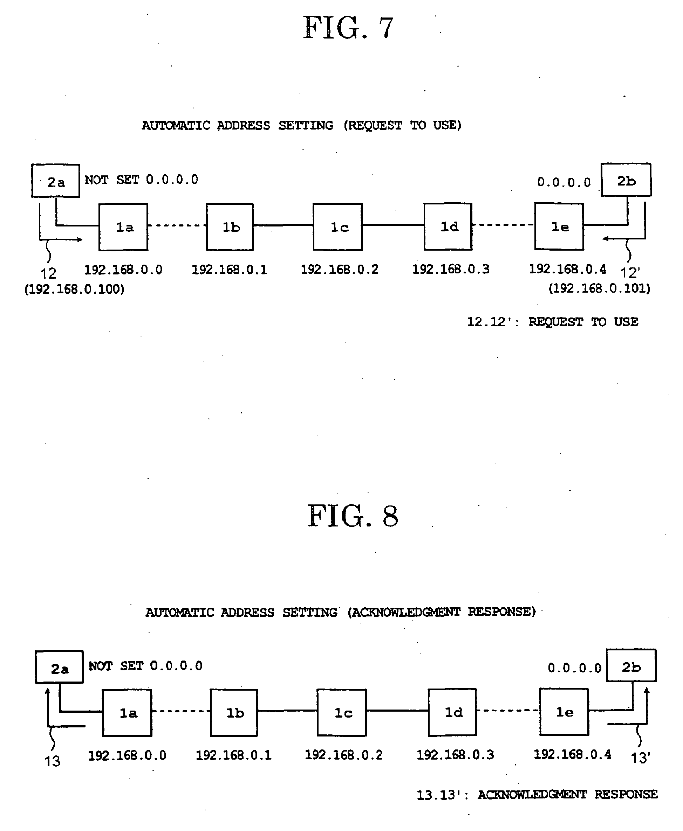

As shown in FIG. 7, when the display device 2a has received the address notification 11, it transmits by broadcast to the transmission device 1a an address use request 12 indicating use of the designated IP address (192. 168. 0. 100). Likewise, the display device 2b transmits to the transmission device 1e an address use request 12' using the designated IP address (192. 168. 0. 101).

As shown in FIG. 8, now that use of the IP address (192. 168. 0. 100) has been enabled, the transmission device 1a transmits an acknowledgement response 13 to the display device 2a. Likewise, the transmission device 1e, now that use of the IP address (192. 168. 0. 101) has been enabled, transmits (response acknowledgement 13') to the display device 2b.

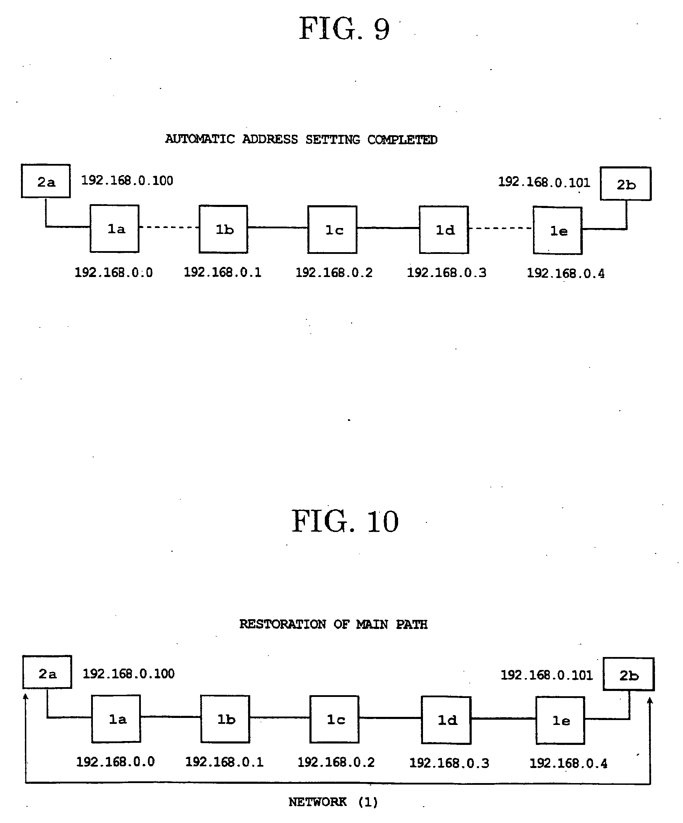

As shown in FIG. 9, now that the display device 2a has received the acknowledgement response 13, it employs the IP address (192. 162. 0. 100) that it has been given by the transmission device 1a, which is the master for automatic address setting. Likewise, the IP address of the display device 2b becomes (192. 168. 0. 101).

As shown in FIG. 10, the transmission device 1a, after setting the IP address in respect of the display device 2a, releases the transmission/reception inhibition of the transmission device 1b so that this can participate in the network (1). Likewise, the transmission device 1e, after setting the IP address of the display device 2b, participates in the network (1).

In this way, the final IP addresses of the transmission devices 1a to 1e are set to (192. 168. 0. 0) to (192. 168. 0. 4), the final IP address of the display device 2a is set to (192. 168. 0. 100), and the final IP address of the display device 2b is set to (192. 168. 0. 101).

Thus, in the transmission system for rail vehicles according to the present embodiment, the IP addresses of the electrical devices (display devices 2a, 2b) can be automatically allocated to the same prescribed addresses on each occasion; this therefore makes it possible to dispense with IP address setting when an electrical device is replaced, and makes it possible to rapidly constitute the network. It should be noted that, although, in the present embodiment, a 2-stage acknowledgement method was adopted, since the ordinary DHCP method was employed for IP address setting of the electrical devices, a single-stage acknowledgement method could be adopted, or the method could be adopted of specifying the IP address from the transmission device 1.

### (Second embodiment)

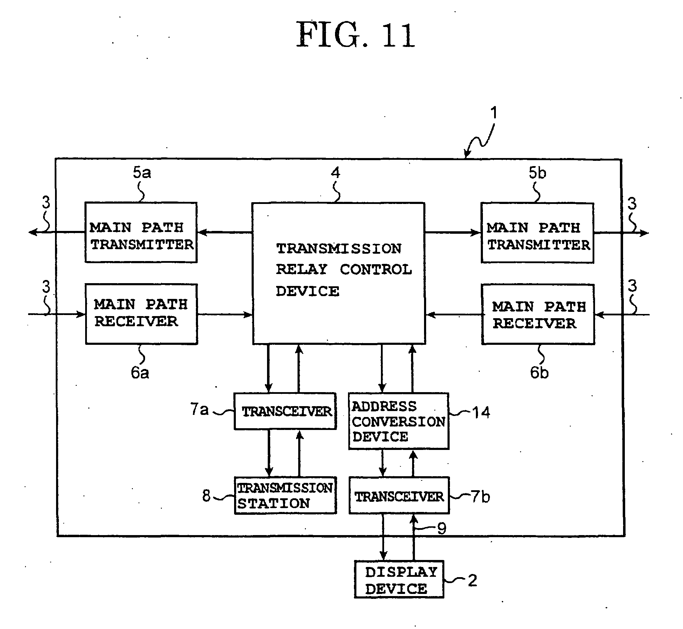

A transmission system for rail vehicles according to a second embodiment of the present invention will now be described with reference to FIG. 11 to FIG. 15. As shown in FIG. 11, in a transmission system for rail vehicles according to the present embodiment, a transmission device 1 comprises: 2-port main path transmitters 5a, 5b, 2-port main path transceivers 6a, 6b, a transceiver 7a that performs data exchange within its host vehicle, a transmission station 8, and a transceiver 7b that performs transmission with respect to a display device 2 constituting an electrical device, an address conversion device 14 that checks and converts the IP address in the transmission/reception data from the display device 2 constituting an electrical device, and a transmission relay control device 4 that controls the transceivers.

It should be noted that, although, in the present embodiment, the electrical device was described as being a display device 2, other devices could be employed. Also, although, in the present embodiment, a single electrical device was described, more than one electrical device could be employed. In this case, the number of transceivers 7b is increased. Also, although in the description of the transmission system for rail vehicles of the present embodiment, the employment of IPV4 private address class C as the transmission station address was described, Class B or Class A could be employed, and IPV6 etc could be employed.

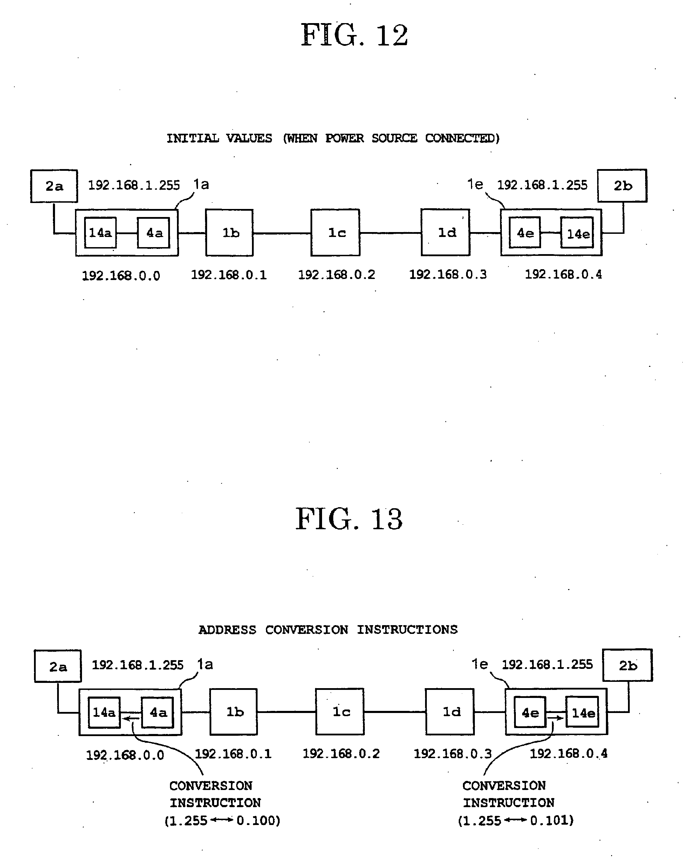

Next, the operation of the transmission system for rail vehicles according to the present embodiment will be described. As shown in FIG. 12, in the initial condition when the power source is connected, the transmission devices 1a to 1e have IP addresses: (192. 168. 0. 0) to (192. 168. 0. 4). On the other hand, the display devices 2a, 2b are in the condition that their IP addresses are the default address (192. 168. 1. 255). At this point, the address conversion devices 14a, 14e in the transmission device 1a and transmission device 1e are not yet set, so address conversion is not performed.

As shown in FIG. 13, first of all, the transmission relay control device 4a of the transmission device 1a issues an instruction for conversion of the IP address (192. 168. 1. 255) to (192. 168. 0. 100) to the address conversion device 14 of the transmission device 1a. Likewise, the transmission relay control device 4e of the transmission device 1e issues an instruction for conversion of the IP address (192. 168. 1. 255) to (192. 168. 0. 101) to the address conversion device 14e of the transmission device 1e.

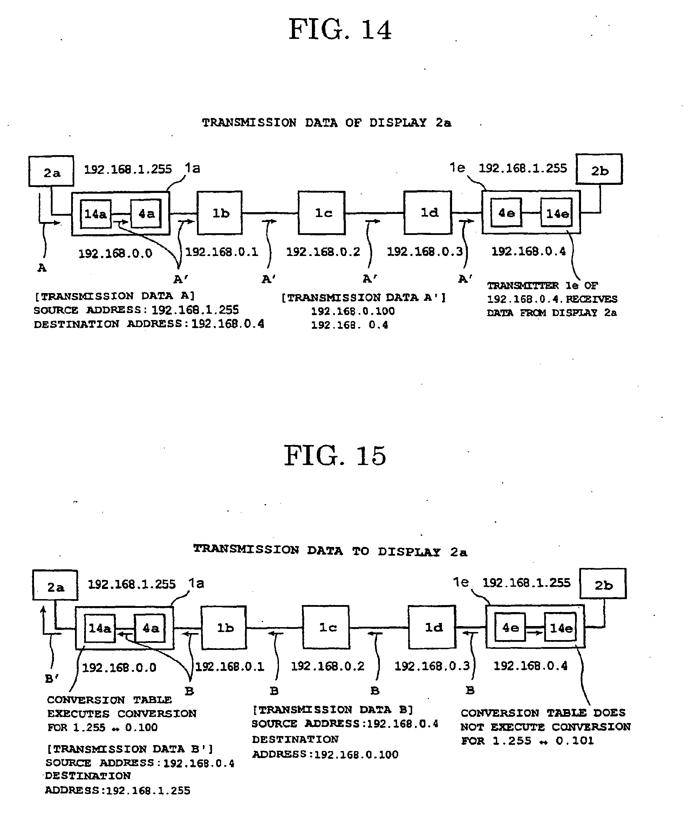

The form in which the transmission data (destined for the transmission device 1e) from the display device 2a flows through the network will now be described with reference to FIG. 14. Since the IP address of the display device 2a is (192. 168. 1. 255), the transmitted data A from the display device 2a is: source IP address=192. 168. 1. 255, destination IP address=192. 168. 0. 4. The address conversion device 14a of the transmission device 1a that receives the transmitted data A checks the source IP address of the received data A. If this address agrees with the address designated by the transmission relay control device 4a, the address conversion device 14a then converts the source IP address; however, if it does not agree, no conversion is performed and the data is transferred straight through. Since, in the case of the transmission data A, such agreement is obtained, the transmission data A' that is output from the address conversion device 14a becomes: source IP address=192. 168. 0. 100, destination IP address=192. 168. 0. 4: this data therefore passes through the transmission devices 1a, 1b, 1c, 1d to reach the target transmission device 1e (IP address=192. 169. 0. 4). Since the source IP address=192. 168. 0. 100, the transmission device 1e concludes that this data is data from the display device 2a.

Next, the form in which the transmission data B to the display device 2a from the transmission device 1e flows through the network will be described with reference to FIG. 15. The transmission data B from the transmission device 1e (IP address=192. 168. 0. 4) has source IP address=192. 168. 0. 4 and destination IP address=192. 168. 0. 100 and so flows to the transmission device 1d and address conversion device 14e. When the address conversion device 14e receives the transmission data B, it checks the destination IP address, and, since this is different from the address 192. 168. 0. 101 that is required for conversion to be performed by this address conversion device itself, allows the data to flow to the display device 2b without modification. The display device 2b that receives the transmission data B, since this received data has a different IP address from its own IP address=192. 168. 1. 255, does not adopt this data. The transmission data B flowing to the transmission device 1d passes through the transmission devices 1d, 1c, 1b, to reach the address conversion device 14a of the transmission device 1a. The address conversion device 14a checks the transmission IP address of the received data B, and, since this coincides with the address 192. 168. 0. 100 that is required for conversion to be performed by this address conversion device itself, converts the destination IP address to (192. 168. 1. 255), and sends the converted transmission data B' to the display device 2a. The display device 2a, since the destination IP address of the received data B' coincides with its own IP address=192. 168. 1. 255, adopts this data.

With the transmission system for rail vehicles according to the present embodiment constructed in this way, even if the IP addresses of the electrical devices (display devices 2a, 2b) are left unaltered at the same value, it is possible to maintain uniqueness of addresses on the data flowing on the network, thanks to the conversion of the source address or destination IP address that is performed by the address conversion device 14 in the transmission device 1. Also, since the IP addresses of the display devices 2a, 2b are the same, IP address setting on replacement of electrical devices can be dispensed with. In this way, with the transmission system for rail vehicles according to the present embodiment, a network of high redundancy can be rapidly constituted.

Obviously, numerous additional modifications and variations of the present invention are possible in light of the above teachings. It is therefore to be understood that within the scope of the appended claims, the present invention may be practiced otherwise than as specially described herein.

## Claims

1. A transmission system for rail vehicles comprising:
a transmission device amounted on each of a plurality of vehicles (No. 1 to No. 5), having a plurality of transmission ports, and adapted to transmit data received from any port to a required transmission port in accordance with a prescribed instruction;
a transmission path (3) for connecting transmission devices mounted in each of a plurality of said vehicles;
an electrical device (2) that is connected with respective said transmission device and adapted to exchange data with said transmission device; and
a transmission relay control device (4) arranged in respective said transmission device and adapted to set a transmission station address of said electrical device connected to a host transmission device,
wherein said transmission device (1) is adapted, on address setting of an electrical device having an automatic address setting function in a network in which there are mounted a plurality of electrical devices of the same type, to create a condition wherein only said transmission device (1) itself and an electrical device (2) that is connected with said transmission device (1) are connected to said network, by temporarily stopping data exchange with an other transmission device and
designating said transmission station addresses of said electrical device (2) in accordance with a prescribed setting.

2. The transmission system for rail vehicles according to claim 1,
wherein said transmission device (1) is adapted, when setting a transmission station address of said electrical device that is connected with said transmission device itself, to set said address to an address that is calculated by said address of said transmission station itself.

3. A transmission system for rail vehicles comprising:
a transmission device (1) mounted on each of a plurality of vehicles (No. 1 to No. 5), having a plurality of transmission ports, and adapted to transmit data received from any port to a required transmission port in accordance with a prescribed instruction;
a transmission path (3) for connecting between said transmission devices mounted in a plurality of said vehicles;
an electrical device (2) that is connected with respective said transmission device and adapted to exchange data with said transmission device; and
a transmission relay control device (4) arranged in respective said transmission device and adapted to set a transmission station address of said electrical device connected to a host transmission device; and
a transmission station address conversion device (14) connected with said transmission relay control device and adapted to convert said transmission station address,
wherein said transmission station address conversion device (14) is adapted to employ said same transmission station address as default address in respect of said transmission stations of identical electrical devices,
and adapted to uniquely set said transmission station address on data flowing on a network even when more than one electrical device (2) of the same type is present on said network, by converting said transmission station address in the data to a prescribed transmission station address when data is received from an electrical device and on data transmission to an electrical device.

4. The transmission system for rail vehicles according to claim 3,
wherein said transmission station address conversion device (14) is adapted to convert said transmission station address of said electrical device (2) in accordance with the direction of travel of said rail vehicle, by dynamically altering said transmission station address conversion of said electrical device (2).

## Patentansprüche

1. Ein Übertragungssystem für Schienenfahrzeuge, umfassend:
ein Übertragungsgerät (1), angebracht an jedem einer Vielzahl von Fahrzeugen (Nr. 1 bis Nr. 5) mit einer Vielzahl von Übertragungsports, und ausgebildet zum Übertragen von Daten, die empfangen werden von irgendeinem Port, an einen benötigten Übertragungsport gemäß einer vorgeschriebenen Instruktion;
einen Übertragungspfad (3) zum Verbinden von Übertragungsgeräten, angebracht in jedem einer Vielzahl der Fahrzeuge;
ein elektrisches Gerät (2), das verbunden ist mit einem entsprechenden Übertragungsgerät und ausgebildet zum Austauschen von Daten mit dem Übertragungsgerät; und
ein Übertragungsweiterleit-Steuergerät (4), angeordnet in dem entsprechenden Übertragungsgerät, und ausgebildet zum Setzen einer Übertragungsstationsadresse des elektrischen Geräts, verbunden mit einem Host-Übertragungsgerät,
wobei das Übertragungsgerät (1) ausgebildet ist, beim Adressensetzen eines elektrischen Geräts mit einer automatischen Adressensetzfunktion in einem Netzwerk, in dem eine Vielzahl von elektrischen Geräten des gleichen Typs angebracht ist, zum Erzeugen eines Zustands, in dem nur das Übertragungsgerät (1) selbst und ein elektrisches Gerät (2), das verbunden ist mit dem Übertragungsgerät (1), verbunden sind mit dem Netzwerk, durch temporäres Stoppen eines Datenaustausches mit einem anderen Übertragungsgerät und Bezeichnen der Übertragungsstationsadressen des elektrischen Geräts (2) gemäß einer vorgeschriebenen Einstellung.

2. Das Übertragungssystem für Schienenfahrzeuge nach Anspruch 1,
wobei das Übertragungsgerät (1) ausgebildet ist, wenn eine Übertragungsstationsadresse des elektrischen Geräts gesetzt wird, das verbunden ist mit dem Übertragungsgerät selbst, zum Setzen der Adresse auf eine Adresse, die berechnet wird durch die Adresse der Übertragungsstation selbst.

3. Ein Übertragungssystem für Schienenfahrzeuge, umfassend:
ein Übertragungsgerät (1), angebracht an jedem einer Vielzahl von Fahrzeugen (Nr. 1 bis Nr. 5) mit einer Vielzahl von Übertragungsports, und ausgebildet zum Übertragen von Daten, die empfangen werden von irgendeinem Port, an einen benötigten Übertragungsport gemäß einer vorgeschriebenen Instruktion;
einen Übertragungspfad (3) zum Verbinden zwischen den Übertragungsgeräten, angebracht in einer Vielzahl der Fahrzeuge;
ein elektrisches Gerät (2), das verbunden ist mit dem entsprechenden Übertragungsgeräts und ausgebildet zum Austauschen von Daten mit dem Übertragungsgerät; und
ein Übertragungsweiterleit-Steuergerät (4), angeordnet in dem entsprechenden Übertragungsgerät, und ausgebildet zum Setzen einer Übertragungsstationsadresse des elektrischen Geräts, verbunden mit einem Host-Übertragungsgerät; und
ein Übertragungsstationsadressen-Umwandlungsgerät (14), verbunden mit dem Übertragungsweiterleit-Steuergerät und ausgebildet zum Umwandeln der Übertragungsstationsadresse,
wobei das Übertragungsstationsadressen-Umwandlungsgerät (14) ausgebildet ist zum Verwenden der gleichen Übertragungsstationsadresse als Standardadresse hinsichtlich der Übertragungsstationen von identischen elektrischen Geräten,
und ausgebildet ist zum eindeutigen Setzen der Übertragungsstationsadresse hinsichtlich Daten, die auf einem Netzwerk fließen, selbst wenn mehr als ein elektrisches Gerät (2) der gleichen Art vorliegt auf dem Netzwerk, durch Umwandeln der Übertragungsstationsadresse in den Daten in eine vorgeschriebene Übertragungsstationsadresse, wenn Daten empfangen werden von einem elektrischen Gerät und hinsichtlich einer Datenübertragung an ein elektrisches Gerät.

4. Das Übertragungssystem für Schienenfahrzeuge nach Anspruch 3,
wobei das Übertragungsstationsadressen-Umwandlungsgerät (14) ausgebildet ist zum Umwandeln der Übertragungsstationsadresse des elektrischen Geräts (2) gemäß der Richtung des Wegs des Schienenfahrzeugs, durch dynamisches Verändern der Übertragungsstationsadressenumwandlung des elektrischen Geräts (2).

## Revendications

1. Système de transmission pour véhicules ferroviaires comprenant :
un dispositif de transmission (1) monté sur chaque véhicule d'une pluralité de véhicules (N° 1 à N° 5), comportant une pluralité de ports de transmission et adapté à transmettre des données reçues depuis un port quelconque vers un port de transmission requis conformément à une instruction prescrite ;
un chemin de transmission (3) pour relier des dispositifs de transmission montés dans chaque véhicule d'une pluralité desdits véhicules ;
un dispositif électrique (2) relié audit dispositif de transmission respectif et adapté à échanger des données avec ledit dispositif de transmission ; et
un dispositif de commande de relais de transmission (4) agencé dans ledit dispositif de transmission respectif et adapté à déterminer une adresse de station de transmission dudit dispositif électrique relié à un dispositif de transmission hôte,
dans lequel, lors de la détermination d'adresse d'un dispositif électrique ayant une fonction de détermination d'adresse automatique dans un réseau dans lequel sont montés une pluralité de dispositifs électrique du même type, ledit dispositif de transmission (1) est adapté à créer une condition dans laquelle seul ledit dispositif de transmission (1) lui-même et un dispositif électrique (2) relié audit dispositif de transmission (1) sont reliés audit réseau, en arrêtant temporairement l'échange de données avec un autre dispositif de transmission et en désignant lesdites adresses de station de transmission dudit dispositif électrique (2) conformément à un réglage prescrit.

2. Système de transmission pour véhicules ferroviaires selon la revendication 1,
dans lequel, lors de la détermination d'une adresse de station de transmission dudit dispositif électrique qui est relié audit dispositif de transmission lui-même, ledit dispositif de transmission (1) est adapté à déterminer ladite adresse à une adresse qui est calculée par ladite adresse de ladite station de transmission elle-même.

3. Système de transmission pour véhicules ferroviaires comprenant :
un dispositif de transmission (1) monté sur chaque véhicule d'une pluralité de véhicules (N° 1 à N° 5), comportant une pluralité de ports de transmission et adapté à transmettre des données reçues depuis un port quelconque vers un port de transmission requis conformément à une instruction prescrite ;
un chemin de transmission (3) pour relier lesdits dispositifs de transmission montés dans une pluralité desdits véhicules ;
un dispositif électrique (2) relié audit dispositif de transmission respectif et adapté à échanger des données avec ledit dispositif de transmission ; et
un dispositif de commande de relais de transmission (4) agencé dans ledit dispositif de transmission respectif et adapté à déterminer une adresse de station de transmission dudit dispositif électrique relié à un dispositif de transmission hôte ; et
un dispositif de conversion d'adresse de station de transmission (14) relié audit dispositif de commande de relais de transmission et adapté à convertir ladite adresse de station de transmission,
dans lequel ledit dispositif de conversion d'adresse de station de transmission (14) est adapté à utiliser la même adresse de station de transmission comme adresse par défaut par rapport auxdites stations de transmission de dispositifs électriques identiques,
et adapté à déterminer de manière unique ladite adresse de station de transmission sur des données circulant sur un réseau, même lorsque plusieurs dispositifs électriques (2) du même type sont présents sur ledit réseau, en convertissant ladite adresse de station de transmission dans les données en une adresse de station de transmission prescrite lorsque des données sont reçues depuis un dispositif électrique et sur la transmission de données à un dispositif électrique.

4. Système de transmission pour véhicules ferroviaires selon la revendication 3,
dans lequel ledit dispositif de conversion d'adresse de station de transmission (14) est adapté à convertir ladite adresse de station de transmission dudit dispositif électrique (2) conformément à la direction de parcours dudit véhicule ferroviaire, en modifiant de manière dynamique ladite conversion d'adresse de station de transmission dudit dispositif électrique (2).
